# EUROPÄISCHE PATENTSCHRIFT

(11) **EP 0 932 992 B1**
(45) Veröffentlichungstag und Bekanntmachung des Hinweises auf die Patenterteilung: **02.08.2006**
(21) Anmeldenummer: 97945748.8
(22) Anmeldetag: 14.10.1997
(51) Int. Cl.: H04Q 7/32, B60R 25/10

(54) **VERFAHREN ZUR ÜBERTRAGUNG VON FUNKSIGNALEN**
METHOD FOR RADIO SIGNAL TRANSMISSION
PROCEDE DE TRANSMISSION DE SIGNAUX RADIOELECTRIQUES

(30) Priorität: 15.10.1996 DE 19642515
(43) Veröffentlichungstag der Anmeldung: 04.08.1999
(60) Teilanmeldung: 05100360.6
(73) Patentinhaber: ROBERT BOSCH GMBH, 70442 Stuttgart (DE)
(72) Erfinder: WEIGL, Andreas, D-76351 Linkenheim-Hochstetten (DE); WEISS, Karl-Ernst, D-76275 Ettlingen (DE); DIEHL, Udo, D-70195 Stuttgart (DE); HAAS, Hardy, D-71706 Markgröningen (DE); SCHRAMM, Dieter, D-70469 Stuttgart (DE); BOCHMANN, Harald, D-30419 Hannover (DE); KEUTMANN, Christoph, D-13585 Berlin (DE); KAISER, Karl-Heinz, D-71732 Tamm (DE); DIEBOLD, Bernd, D-77866 Rheinau (DE)
(86) Internationale Anmeldenummer: PCT/DE1997/002343
(87) Internationale Veröffentlichungsnummer: WO 1998/017073

(56) Entgegenhaltungen:
- EP-A- 0 290 725
- WO-A-93/23766
- WO-A-96/08933
- US-A- 4 825 457
- US-A- 4 873 711
- US-A- 5 351 270
- US-A- 5 555 286

## Beschreibung

### Stand der Technik

Die Erfindung geht von einem Verfahren zur Übertragung von Funksignalen nach der Gattung des Hauptanspruchs aus.

Aus der EP 0 290 725 B1 ist ein Verfahren zur Absetzen eines Notrufs bekannt, bei dem eine mobile Funkstation eine Notruftaste aufweist. Bei der Betägigung der Notruftaste werden automatisch ein Notrufsignel und die Kennung der mobilen Funkstation ausgesendet. Dabei kann auch eine digital gespeicherte Zuzatzinformation, wie zum Beispiel "Meldung eines Unfalls", ausgesendet werden. Die Zusatzinformationen können vorbereitete Texte sein, Angaben über den zurückgelegten Weg der mobilen Funkstation sowie die Uhrzeit der Aussendung sein. Die Übertragung der Ortsinformation erfolgt vorzugsweise mittels Datentelegrammen mit einem selbstkorrigierenden Code, zum Beispeil einem Interleaving-Code. Um die Übertragungssicherheit zu erhören, sendet die mobile Funkstation die Ortsinformation mehrmals nacheinander aus. Eine zentrale Auswerstelle bestätigt dann den ordnungsgemäßen Empfang der Ortsinformation durch ein Quittungssignal. Sobald die mobile Funkstation das Quittungsignal empfangen und ausgewerdet hat, wird die Folge von gleichen Ortsinformation unterbrochen. Als Quittungsignal wird vorzugsweise das von der zentralen Auswertestelle empfangene und die Ortsinformation enthaltende Datentelegramm ausgesendet, wobei das Quittungssignal auf einer Anzeigevorrichtung der mobilen Funkstation angezeigt und/oder mittels eines Druckers ausgedruckt wird.

Aus US-A-4,873,711 ist ein mobiler Sende-Empfänger bekannt, der in einem Fahrzeug montiert ist. Der Sende-Empfänger kommuniziert über eine zweite mobile Einheit mit einer portablen Einheit kurzer Reichweite. Die portable Einheit ermöglicht es einem entfernt positionierten Benutzer, Meldungen an eine Basisstation zu übertragen. Die portable und die zweite mobile Einheit kommunizieren über ein erstes Frequenzpaar miteinander. Der mobile Sende-Empfänger im Fahrzeug und die Basisstation kommunizieren miteinander über ein zweites Paar unterschiedlicher Frequenzen. Das in der zweiten mobilen Einheit empfangene Signal wird in einem Mikroprozessor dekodiert. Eine erste mobile Einheit des Sendeempfängers sendet daraufhin ein Signal mit einem vorgegebenen Code zur Basisstation, um die Basisstation bspw. über einen Notfall zu informieren. Die Informationen können in der Basisstation weiter ausgewertet werden.

### Vorteile der Erfindung

Das erfindungsgemäße Verfahren mit den Merkmalen des Hauptanspruchs hat demgegenüber den Vorteil, daß bei Funksignalen, die nur mit schwacher Leistung beispielsweise von einem Fahrzeug ausgesendet werden, eine in der Nähe befindliche vorzugsweise mobile Station mit einer Sende-/Empfangsanlage als Relais-Station dient, die die empfangenen Funksignale auswertet und in Abhängigkeit der Auswertung weitere Funksignale mit den Informationen der empfangenen Funksignale abstrahlt, so daß sie in der an einem zentralen Punkt befindlichen Empfangsanlage zur weiteren Auswertung empfangen werden. Auf diese Weise gelangen auch mit schwacher Leistung abgestrahlte Funksignale beispielsweise eines Notrufs aufgrund zum Beispiel eines Antennenschadens oder auch Funksignale, die an für die Abstrahlung geographisch ungünstiger Situationen ausgesendet wurden, dennoch zu einer zentralen Empfangsanlage, bei der dann in Abhängigkeit der empfangenen Funksignale entsprechende Maßnahmen eingeleitet werden können.

Besonders vorteilhaft ist auch, daß zur Weiterleitung dieser Funksignale kein zusätzlicher Aufwand und keine zusätzlichen Kosten erforderlich sind, da ohnehin vorhandene Sende-/Empfangsanlagen anderer mobiler oder auch fester Stationen Verwendung finden.

Ein weiterer Vorteil besteht darin, daß zur Abstrahlung der Funksignale keine Mobilfunkanlage, sondern nur ein vergleichsweise schwacher Sender erforderlich ist, lediglich zur Weiterleitung der Funksignale ist eine Mobilfunkanlage erforderlich. Somit werden bei der Abstrahlung der Funksignale Kosten und Aufwand eingespart.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist die Übertragung der Funksignale zwischen der Sendeeinrichtung und der Sende-/Empfangseinrichtung in einem ersten Funknetz und/oder in einer Frequenzlage und die Übertragung der Funksignale zwischen der Sende-/Empfangseinrichtung und der an dem zentralen Punkt befindlichen Empfangsanlage in einem zweiten vom ersten Funknetz verschiedenen Funknetz und/oder in einer zweiten von der ersten Frequenzlage verschiedenen Frequenzlage. Auf diese Weise kommt es nicht zu einer störenden Überlagerung der weitergeleiteten und ursprünglich abgestrahlten Funksignale in den Sende-/Empfangseinrichtungen.

Vorteilhaft ist auch, daß mit den weitergeleiteten Funksignalen die Position der Sendeeinrichtung und/oder der Sende-/Empfangseinrichtung übertragen wird. Dadurch wird erreicht, daß zumindest der ungefähre Standort der Sendeeinrichtung an den zentralen Empfänger mitgeteilt werden kann, so daß eventuell erforderliche Hilfsmaßnahmen besser koordiniert werden können.

Ein Vorteil besteht auch darin, daß die Sendeeinrichtung ferngesteuert durch eine Leitzentrale zur Abstrahlung von Funksignalen aktiviert wird. Dadurch läßt sich beispielsweise ein Diebstahlschutz realisieren, indem ein gestohlenes Fahrzeug zur Abstrahlung seiner Position durch die Leitzentrale aktiviert wird. Das Fahrzeug kann auf diese Weise ausfindig gemacht werden.

Vorteilhaft ist auch, daß die Sendeeinrichtung durch Sensorsignale, vorzugsweise durch einen Airbagsensor, einen Gurtsensor, einen Crashsensor oder dergleichen zur Abstrahlung von Funksignalen aktiviert wird. Auf diese Weise kann bei einem Unfall automatisch ein Notruf ausgesandt werden, was besonders im Falle von Verletzten zu schnellerer Einleitung von Hilfsmaßnahmen führt.

Vorteilhaft ist weiterhin, daß bei Absinken der Sendeleistung der Antenne der Sendeeinrichtung unter einen vorgegebenen Wert eine Hilfsantenne automatisch an die Sendeeinrichtung angekoppelt wird. Dadurch wird auch bei beeinträchtigter oder wegfallender Antennenfunktion der Sendeeinrichtung weiterhin die Möglichkeit zumindest einer schwachen Abstrahlung von Funksignalen ermöglicht.

Ein weiterer Vorteil besteht darin, daß die Funksignale zwischen der Sendeeinrichtung und der Sende-/Empfangseinrichtung mit einer vorgegebenen Frequenz übertragen werden. Auf diese Weise ist es möglich, daß die Sende-/Empfangseinrichtung einen speziellen Notrufkanal ständig nach Funksignalen abtastet und somit kein empfangener Notruf verloren geht.

Es ist auch vorteilhaft, Funksignale zwischen der Sendeeinrichtung und der Sende-/Empfangseinrichtung breitbandig in einem vorgegebenen Frequenzbereich zu übertragen. Dadurch wird die Möglichkeit gegeben, ein Notrufsignal auch dann zu detektieren, wenn kein spezieller Notrufkanal von der Sende-/Empfangseinrichtung abgetastet wird.

### Zeichnung

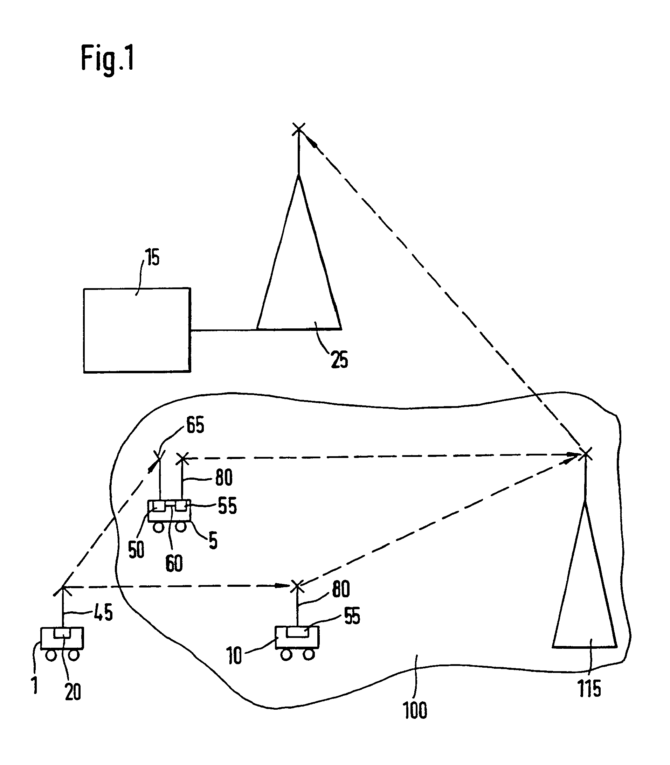

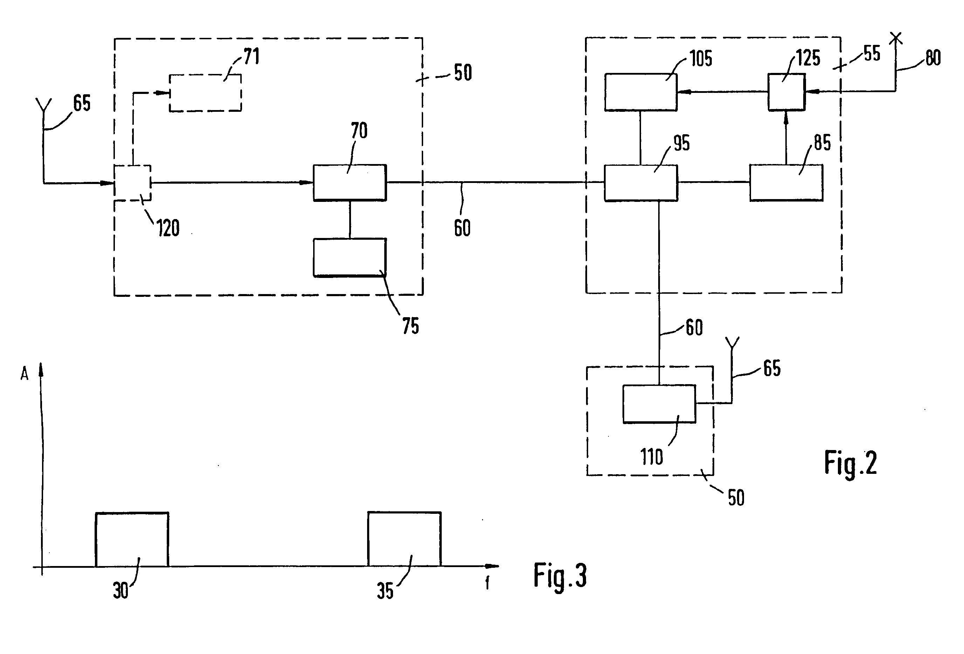

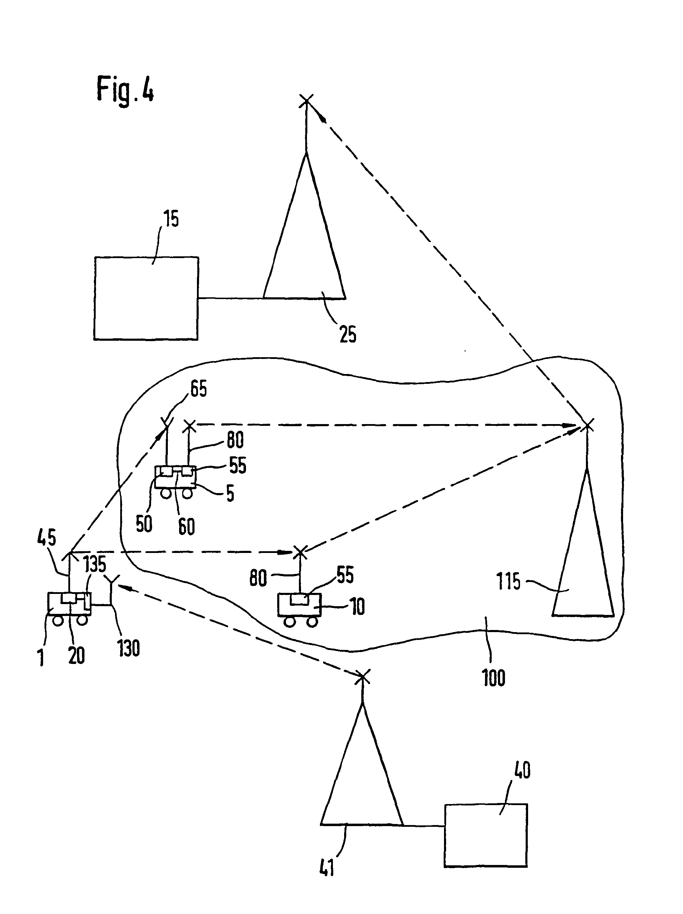

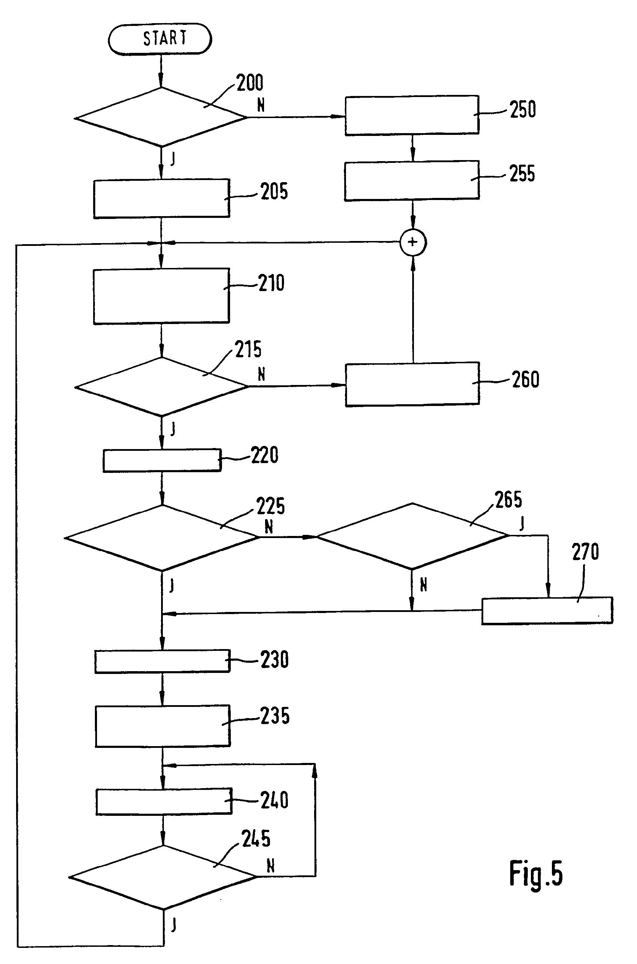

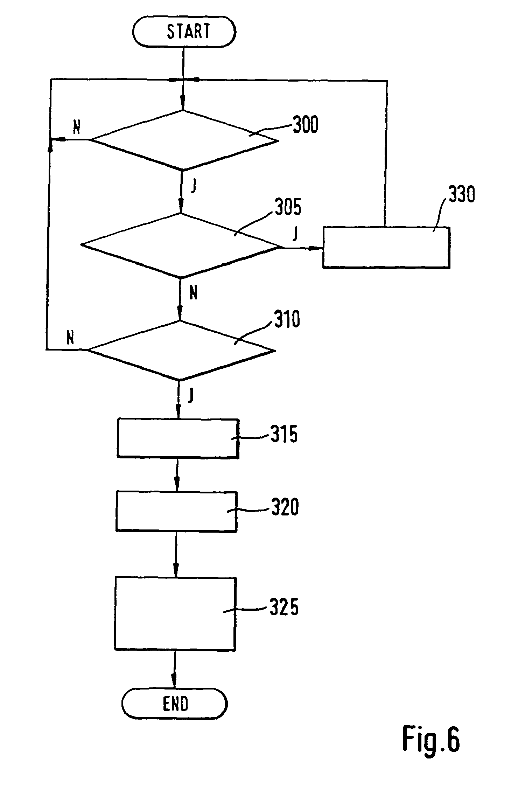

Ein Ausführungsbeispiel der Erfindung ist in der Zeichnung dargestellt und in der nachfolgenden Beschreibung näher erläutert. Es zeigen Figur 1 eine Übertragungsstrecke von einer mobilen Sendeeinrichtung über mobile und feste Relaisstationen an einen zentralen Empfänger, Figur 2 das Blockschaltbild eines Rundfunkempfängers und einer funkgesteuerten Zentralverriegelung, die an eine Mobilfunkeinrichtung angeschlossen sind, Figur 3 die spektrale Aufteilung des Frequenzbereichs der von der Sendeeinrichtung abgestrahlten und des Frequenzbereichs der von der Sende-/Empfangseinrichtung weitergeleiteten Funksignale, Figur 4 eine Übertragungsstrecke gemäß Figur 1 mit einer zusätzlichen Leitzentrale, Figur 5 den Ablaufplan für die Detektion von Notrufsignalen in einem Rundfunkempfänger und Figur 6 einen Ablaufplan für die Detektion von Notrufsignalen in einer funkgesteuerten Zentralverriegelung.

### Beschreibung des Ausführungsbeispiels

In Figur 1 kennzeichnet 1 eine erste, als Fahrzeug ausgebildete mobile Station mit einer eingebauten Sendeeinrichtung 20, die mit einer Sendeantenne 45 verbunden ist. Von der Sendeeinrichtung 20 werden über die Sendeantenne 45 Funksignale abgestrahlt, deren Übertragungsweg in Figur 1 gestrichelt dargestellt ist. In einer Funkzelle 100 eines Mobilfunknetzes, die von einer Feststation 115 versorgt wird, befinden sich eine zweite und eine dritte, jeweils als Fahrzeug ausgebildete mobile Station 5 und 10. Die zweite mobile Station 5 weist eine Empfangseinrichtung 50 und eine mit der Empfangseinrichtung 50 über eine Datenleitung 60 verbundene Mobilfunkeinrichtung 55 auf. Funksignale von der Sendeeinrichtung 20 werden von der Sendeantenne 45 abgestrahlt und von der Empfangsantenne 65 der Empfangseinrichtung 50 empfangen. Von der Sende-/Empfangsantenne 80 der Mobilfunkeinrichtung 55 werden weitere Funksignale an die Feststation 115 abgestrahlt. Die dritte mobile Station 10 weist eine Mobilfunkeinrichtung 55 mit einer Sende-/Empfangsantenne 80 auf, die ebenfalls Funksignale von der Sendeeinrichtung 20 empfängt und weitere Funksignale an die Feststation 115 abstrahlt. Von der Feststation 115 werden die weiteren Funksignale an eine an einem zentralen Punkt befindliche Empfangsanlage 25, gegebenenfalls über weitere Feststationen weitergeleitet. Die an dem zentralen Punkt befindlichen Empfangsanlage 25 ist mit einer Zentrale 15 verbunden. Es ist auch denkbar, daß die zweite und/oder die dritte Station 5 und 10 nicht mobil sondern fest sind. Auch die erste Station 1 kann eine Feststation sein.

In Figur 2 sind die Empfangseinrichtung 50 und die Mobilfunkeinrichtung 55 anhand eines Blockschaltbildes genauer dargestellt. Über die Empfangsantenne 65 wird ein empfangenes Funk- und/oder Rundfunksignal der Empfangseinrichtung 50 zugeführt. In Figur 2 sind zwei Empfangsantennen 65 und zwei Empfangseinrichtungen 50 dargestellt. Dabei handelt es sich zum einen um die Empfangseinrichtung 50 einer funkgesteuerten Zentralverriegelung 110 und zum anderen um die Empfangseinrichtung 50 eines Rundfunkempfängers 70. Im Falle des Rundfunkempfängers 70 wird das empfangene Funksignal entweder direkt dem Rundfunkempfänger 70 oder, falls ein zweiter Rundfunkempfänger 71 in der Empfangseinrichtung 50 vorhanden ist, über eine in diesem Fall vorhandene Frequenzweiche 120 dem ersten oder dem zweiten Rundfunkempfänger 70 bzw. 71 zugeführt. Da der zweite Rundfunkempfänger 71 mit der Frequenzweiche 120 optional in die Empfangseinrichtung 50 eingebaut ist, sind beide Elemente in Figur 2 gestrichelt dargestellt. In der Empfangseinrichtung 50 mit dem Rundfunkempfänger 70 ist außerdem ein mit dem Rundfunkempfänger 70 verbundenes Ortungssystem 75 angeordnet. Der Rundfunkempfänger 70 und die funkgesteuerte Zentralverriegelung 110 sind jeweils über eine Datenleitung 60 mit einem Codierer 95 der Mobilfunkeinrichtung 55 verbunden. Der Codierer 95 ist sowohl an einen Mobilfunkempfänger 105, als auch an einen Sender 85 der Mobilfunkeinrichtung 55 angeschlossen. Über eine Antennenweiche 125 ist der Mobilfunkempfänger 105 und der Sender 85 an die Sende-/Empfangsantenne 80 der Mobilfunkeinrichtung 55 angeschlossen.

In Figur 3 ist die spektrale Aufteilung der ersten Frequenzlage 30 für die von der Sendeeinrichtung 20 abgestrahlten Funksignale und der zweiten Frequenzlage 35 der von der Sende-/Empfangseinrichtung 50, 55 weitergeleiteten Funksignale dargestellt. Dabei wird deutlich, daß beide Frequenzlagen durch einen Frequenzabstand voneinander getrennt sind und die erste Frequenzlage 30 kleinere Frequenzen umfaßt als die zweite Frequenzlage 35.

Die zweite und die dritte mobile Station 5 und 10 dienen als Relais-Stationen zur Weiterleitung von Funksignalen, die von der ersten mobilen Station 1 abgestrahlt werden, über die Feststation 115 an die an dem zentralen Punkt befindliche Empfangsanlage 25. Ein solches Verfahren zur Übertragung von Funksignalen ist besonders dann von großer Bedeutung, wenn es sich bei den von der ersten mobilen Station 1 abgestrahlten Funksignalen um solche mit schwacher Leistung handelt. Dies ist beispielsweise dann der Fall, wenn die erste mobile Station 1 verunfallt, eine Panne hat oder einem Überfall ausgesetzt ist. In diesen Fällen können automatisch oder manuell ausgelöste Notsignale von der Sendeeinrichtung 20 über die Sendeantenne 45 abgestrahlt werden. Speziell bei einem Unfall kann die Abstrahlung von Funksignalen durch Sensorsignale aktiviert werden, die durch einen Airbagsensor, einen Gurtsensor, einen Crashsensor oder dergleichen automatisch ausgelöst werden. Wenn nun in den beschriebenen Fällen die im beschriebenen Ausführungsbeispiel als Außenantenne ausgeführte Sendeantenne 45 der Sendeeinrichtung 20 beschädigt wurde, die Sendeeinrichtung 20 insgesamt nicht mehr leistungsstark genug ist oder aufgrund einer ungünstigen geographischen Gegebenheit die an dem zentralen Punkt angeordnete Empfangsanlage 25 zur Einleitung von Hilfsmaßnahmen über die Zentrale 15 nicht erreicht werden kann, so kann der schwache Notruf mittels der in der Nähe der ersten mobilen Station 1 befindlichen zweiten und/oder dritten mobilen Station 5 und 10 empfangen und über das Mobilfunknetz weitergeleitet werden. Anstelle des Mobilfunknetzes kann ein beliebiges anderes Funknetz verwendet werden, wenn die zweite und/oder die dritte mobile Station 5 und 10 mit entsprechenden Funkeinrichtungen ausgerüstet sind. In dem beschriebenen Ausführungsbeispiel werden die Notruffunksignale in einem Rundfunkfrequenzband, beispielsweise im UKW-Rundfunkband und/oder im für fahrzeugtypische Fernsteuerfrequenzen zugelassenen Bereich, beispielsweise für die funkgesteuerte Zentralverriegelung 110 von der Sendeeinrichtung 20 abgestrahlt. Denkbar ist auch die Abstrahlung der Notrufsignale in einem Funknetz, beispielsweise dem Mobilfunknetz. Wird ein im Rundfunkfrequenzbereich von der Sendeeinrichtung 20 abgestrahltes Notrufsignal von einem Rundfunkempfänger der zweiten mobilen Station 5 empfangen, so werden die Funksignale über die Mobilfunkeinrichtung 55 im Mobilfunk weitergeleitet. Dasselbe gilt auch für in dem Frequenzbereich für die funkgesteuerte Zentralverriegelung 110 abgestrahlten Notrufsignale. Werden die Notrufsignale von der Sendeeinrichtung 20 in dem Mobilfunknetz in der ersten Frequenzlage 30 abgestrahlt, so werden sie von der Mobilfunkeinrichtung 55 der dritten mobilen Station 10 empfangen und in der zweiten Frequenzlage 35 im selben Mobilfunknetz weitergeleitet. Das Notsignal ist vorteilhaft zu codieren, um Fehlalarme zu verhindern und die angemessene Hilfsmaßnahme bei einem Unfall, einer Panne, einem Überfall oder dergleichen einzuleiten. Durch die codierte Kennung des von der Sendeeinrichtung 20 abgestrahlten Notrufs wird die Erkennbarkeit gewährleistet, da dieser Code im entsprechenden Empfänger der zweiten und/oder der dritten mobilen Station 5 und 10 bekannt ist und durch entsprechende Algorithmen, zum Beispiel zur Durchführung von Korrelationsverfahren auch bei schwierigen Empfangssituationen, die beispielsweise durch Rauschen und/oder Mehrwegeausbreitung gekennzeichnet sind, erkannt werden kann. Wird der Notruf von der Sendeeinrichtung 20 der ersten mobilen Station 1 digital moduliert abgestrahlt, beispielsweise nach einem orthogonalen Frequenzmultiplex-(OFDM-) Verfahren, so wird die Kennzeichnung des Notrufs erheblich vereinfacht und die Störempfindlichkeit massiv reduziert. Durch Messung des Stehwellenfeldes bei der ersten mobilen Station 1 kann die Sendeleistung der Sendeantenne 45 der Sendeeinrichtung 20 kontrolliert werden. Sinkt die Sendeleistung unter einen vorgegebenen Wert, beispielsweise durch Beschädigung der Sendeantenne 45, so wird eine Hilfsantenne automatisch an die Sendeeinrichtung 20 angekoppelt, so daß zumindest ein Notruf mit schwacher Leistung abgestrahlt werden kann. Besonders hilfreich beim Absetzen eines Notrufs ist die gleichzeitige Übermittlung einer Positionsangabe. Zur Ortung der beispielsweise verunfallten ersten mobilen Station 1 muß eine wenigstens ungefähre Angabe entweder dieser oder der als Relais-Station dienenden zweiten und/oder dritten mobilen Station 5 und 10 gemacht werden. Das bedingt eine Kopplung der Sendeeinrichtung 20 und/oder des entsprechenden Empfängers der zweiten und dritten mobilen Station 5 und 10 mit einem Ortungssystem, beispielsweise einem GPS-Empfänger. In Figur 2 weist die Empfangseinrichtung 50 des Rundfunkempfängers 70 das Ortungssystem 75 auf. Ist die den Notruf aussendende erste mobile Station 1 aufgrund einer Beschädigung oder des Nichtvorhandenseins eines Ortungssystems nicht in der Lage, ihre Position mit dem Notruf abzustrahlen, so wird bei der Weiterleitung des Notrufs durch die zweite und/oder dritte mobile Station 5 und 10 die Position der zweiten und/oder dritten mobilen Station 5 und 10 mit den weitergeleiteten Funksignalen abgestrahlt, wenn die zweite und/oder dritte mobile Station 5 und 10 über ein Ortungssystem wie zum Beispiel das Ortungssystem 75 der Empfangseinrichtung 50 des Rundfunkempfängers 70 verfügt. Da sich die zweite und/oder dritte mobile Station 5 und 10 in der Nähe der ersten mobilen Station 1 befindet, kann zumindest die ungefähre Position der ersten mobilen Station 1 an die Zentrale 15 weitergeleitet werden. Als ungefähre Positionsbestimmung kann bei der Weiterleitung des Notrufs durch die zweite und/oder dritte mobile Station 5 und 10 auch die Zellenstruktur des Mobilfunknetzes benutzt werden. Dabei kann die Funkzelle 100 von der Mobilfunkeinrichtung 55 durch Datenaustausch mit der Feststation 115 selbst ermittelt werden. Eine Ermittlung des ungefähren Aufenthaltsortes der zweiten und/oder dritten mobilen Station 5 und 10 innerhalb der Funkzelle 100 kann durch die jeweilige Mobilfunkeinrichtung 55 auch dadurch realisiert werden, daß sie von der Feststation 115 ausgesandte Feldstärkeinformationen gemäß dem Verfahren aus der Druckschrift EP 0 290 725 B1 auswertet. Zur Ortsbestimmung wird im entsprechend ausgerüsteten Fahrzeug der momentane Standort laufend ermittelt und abgespeichert und entweder gleich von der verunfallten ersten mobilen Station 1 mit dem Notruf oder von der empfangenden zweiten und/oder dritten mobilen Station 5 und 10 mit dem weitergeleiteten Hilferuf ausgesendet. Dies kann auch mit der Uhrzeit des Empfangs im entsprechenden Empfänger der zweiten und/oder dritten mobilen Station 5 und 10 geschehen. Sollte beim ersten Sendeversuch der zweiten und/oder dritten mobilen Station 5 und 10 kein Erfolg erzielt werden, wird eine gewisse Anzahl von Wiederholungen gesendet oder so lange gesendet, bis die entsprechende Empfangseinrichtung der zweiten und/oder dritten mobilen Station 5 und 10 ein Quittierungssignal von der Zentrale 15 detektiert. Dazu ist die Zentrale 15 mit einem entsprechenden Sender verbunden, wobei die Empfangsanlage 25 auch eine Sende-/Empfangsanlage sein kann.

Die Sendeeinrichtung 20 strahlt den Notruf auf einer speziellen vereinbarten Frequenz und/oder breitbandig, zum Beispiel gewobbelt über einen großen Frequenzbereich zum Beispiel dem UKW-Rundfunkfrequenzbereich und/oder dem Frequenzbereich für die funkgesteuerte Zentralverriegelung 110 ab. Die speziell vereinbarte Frequenz liegt dabei in einem sogenannten Notkanal. Weist die Empfangseinrichtung 50 für Rundfunkempfang gemäß Figur 2 nur den Rundfunkempfänger 70 auf, so schaltet der Rundfunkempfänger 70 periodisch von dem gerade eingestellten Rundfunkempfangskanal auf den Notkanal um, wobei er den Notkanal nach Notrufen abtastet. Wechselt der Rundfunkempfänger 70 nicht periodisch auf den Notkanal, so kann dennoch der breitbandig im Rundfunkfrequenzbereich abgestrahlte Notruf auch im gerade eingestellten Rundfunkempfangskanal empfangen werden. Dabei hängt die Erkennung des Notrufs in diesem Fall von der Feldstärke der Notruffunksignale und der Feldstärke der empfangenen Rundfunksignale ab, wobei die Feldstärke der empfangenen Rundfunksignale im Vergleich zu der Feldstärke der Notruffunksignale nicht zu hoch sein darf. Damit auch bei vergleichsweiser hoher Rundfunkfeldstärke die Notrufsignale noch empfangen werden können, könnten die Rundfunksender in regelmäßigen Zeitabschnitten ihre Abstrahlleistung entsprechend senken oder unterbrechen. Aufgrund der Codierung der Notruffunksignale werden diese als solche detektiert. Eine komfortablere Lösung für die Empfangseinrichtung 50 für Rundfunkempfang besteht darin, neben dem Rundfunkempfänger 70 einen zweiten Rundfunkempfänger 71 vorzusehen. Dabei werden dem zweiten Rundfunkempfänger 71 über die Frequenzweiche 120 nur Rundfunksignale eines eingestellten Rundfunkkanals zugeführt, das heißt er springt nicht auf den Notrufkanal. Der erste Rundfunkempfänger 70 hingegen sucht einen Kanal mit besserem Rundfunkempfang und trifft dabei auch auf den Notrufkanal, wo er gegebenenfalls Notruffunksignale detektiert.

Die in dem Frequenzbereich für die funkgesteuerte Zentralverriegelung 110 abgestrahlten Notrufsignale werden von der funkgesteuerten Zentralverriegelung 110 durch ihre Codierung erkannt. Durch die Codierung wird außerdem verhindert, daß fälschlicherweise die Zentralverriegelung betätigt wird. Dies kann auch dadurch verhindert werden, daß bei bewegter mobiler Station 5 bzw. 10 generell ein Schließen der Zentralverriegelung verhindert wird, so daß bei bewegtem Fahrzeug empfangene Notruffunksignale diesbezüglich unschädlich sind. Eine Verbesserung der Unterscheidung zwischen Notrufsignalen und Zentralverriegelungssignalen in der Zentralverriegelung kann auch dadurch erreicht werden, daß sowohl die Notrufsignale als auch die Zentralverriegelungssignale mit einem unterschiedlichen Code codiert sind. Über das Mobilfunknetz abgestrahlte Notrufsignale der Sendeeinrichtung 20 können auch vom Mobilfunkempfänger 105 der Mobilfunkeinrichtung 55 aufgrund ihrer Codierung und/oder Frequenzlage detektiert werden. Dabei trennt die Antennenweiche 125 die vom Sender 85 über die Sende-/Empfangsantenne 80 abzustrahlenden von den durch die Sende-/Empfangsantenne 80 empfangenen Signalen. Dazu müssen sich die erste Frequenzlage 30 der empfangenen Notrufsignale von der zweiten Frequenzlage 35 der von der Mobilfunkeinrichtung 55 weiterzuleitenden Notrufsignale unterscheiden. Die von dem Rundfunkempfänger 70 und/oder der funkgesteuerten Zentralverriegelung 110 empfangenen Notrufsignale werden über jeweils eine Datenleitung 60 dem Codierer 95 der Mobilfunkeinrichtung 55 zugeführt. Im Codierer 95 werden codierte Funksignale zur Weiterleitung über die Feststation 115 an die Empfangsanlage 25 der Zentrale 15 erzeugt und an den Sender 85 weitergeleitet. Vom Sender 85 werden die weiterzuleitenden Funksignale in die zweite Frequenzlage 35 umgesetzt und über die Antennenweiche 125 und die Sende-/Empfangsantenne 80 abgestrahlt. Wenn den von dem Rundfunkempfänger 70 empfangenen Notrufsignalen keine Positionsbestimmung beigefügt ist, wird dies dem an den Rundfunkempfänger 70 angeschlossenen Ortungssystem 75 mitgeteilt, so daß das Ortungssystem 75 seine ermittelte Position an den Rundfunkempfänger 70 abgibt, wo diese Ortsinformation zusammen mit dem Notruf zu dem weiterzuleitenden Notruffunksignal kombiniert und an den Codierer 95 zur Codierung abgegeben wird. Werden vom Mobilfunkempfänger 105 Notrufsignale über die Sende/Empfangsantenne 80 und die Antennenweiche 125 empfangen, so werden sie im Mobilfunkempfänger 105 decodiert und an den Codierer 95 abgegeben. Im Codierer 95 werden die Notrufsignale neu codiert und in der beschriebenen Weise nach Weiterleitung an den Sender 85 von diesem über die Sende-/Empfangsantenne 80 in der zweiten Frequenzlage 35 abgestrahlt. Vor der Weiterleitung der Notrufsignale vom Rundfunkempfänger 70 und von der funkgesteuerten Zentralverriegelung 110 werden die Notrufsignale im Rundfunkempfänger 70 bzw. in der funkgesteuerten Zentralverriegelung 110 ebenfalls decodiert, so daß im Codierer 95 immer eine Neucodierung stattfindet. In einem weiteren Ausführungsbeispiel kann die Mobilfunkeinrichtung 55 in die Empfangseinrichtung 50 integriert sein, so daß die Empfangseinrichtung 50 beispielsweise ein Autoradio mit integrierter Mobilfunkeinrichtung darstellt.

In Figur 5 ist ein Ablaufdiagramm für die Detektion und Verarbeitung von in dem Rundfunkempfänger 70 empfangenen Notruffunksignalen der Sendeeinrichtung 20 dargestellt. Vorausgesetzt ist bei diesem Ablaufplan, daß in der Empfangseinrichtung 50 nur ein Rundfunkempfänger 70 vorhanden ist, der periodisch einen Notrufkanal nach Notruffunksignalen abtastet. Bei Programmpunkt 200 wird zunächst geprüft, ob der Rundfunkempfänger eingeschaltet ist. Ist dies der Fall, so wird zu Programmpunkt 205 verzweigt, andernfalls wird zu Programmpunkt 250 verzweigt.

Bei Programmpunkt 250 wird ein Stromsparmodus eingeschaltet. Anschließend wird zu Programmpunkt 255 verzweigt, bei dem für einen Timer ein vergleichsweise großes Zeitintervall vorgegeben wird. Bei Programmpunkt 205 wird für den Timer ein vergleichsweise kleines Zeitintervall vorgegeben. Sowohl von Programmpunkt 205 als auch von Programmpunkt 255 wird auf den Programmpunkt 210 verzweigt, bei dem ein timergesteuertes Umschalten auf den Notrufkanal stattfindet. Dabei wird periodisch immer nach Ablauf des eingestellten Zeitintervalls auf den Notrufkanal umgeschaltet. Bei Programmpunkt 215 wird geprüft, ob auf dem Notrufkanal ein Notruf vorliegt. Ist dies der Fall, so wird zu Programmpunkt 220 verzweigt, andernfalls wird zu Programmpunkt 260 verzweigt. Bei Programmpunkt 260 wird auf Rundfunkempfang zurückgeschaltet. Anschließend wird wieder zu Programmpunkt 210 verzweigt. Bei Programmpunkt 220 wird der detektierte Notruf decodiert. Bei Programmpunkt 225 wird geprüft, ob in dem decodierten Notruf eine Positionsangabe enthalten ist. Ist dies der Fall, so wird zu Programmpunkt 230 verzweigt, andernfalls wird zu Programmpunkt 265 verzweigt. Bei Programmpunkt 265 wird geprüft, ob die eigene Position bekannt ist, das heißt, ob an den Rundfunkempfänger 70 ein Ortungssystem 75 angeschlossen ist und wenn dies der Fall ist, ob in dem Ortungssystem 75 die aktuelle Position gespeichert ist. Ist dies der Fall, so wird zu Programmpunkt 270 verzweigt, andernfalls wird zu Programmpunkt 230 verzweigt. Bei Programmpunkt 270 wird das Ortungssystem 75 vom Rundfunkempfänger 70 veranlaßt, die Positionsangabe an den Rundfunkempfänger 70 abzugeben. Von Programmpunkt 270 wird ebenfalls zu Programmpunkt 230 verzweigt. Bei Programmpunkt 230 wird der aktuelle Zeitpunkt ermittelt. Bei Programmpunkt 235 wird der Notruf, der ermittelte Zeitpunkt und, falls bekannt, die Position gespeichert. Bei Programmpunkt 240 werden die gespeicherten Daten an den Codierer 95 der Mobilfunkeinrichtung 55 abgegeben. Der bei Programmpunkt 240 an die Mobilfunkeinrichtung 55 abgegebene Notruf mit Zeit- und, falls bekannt, Positionsangabe, wird nach erneuter Codierung und Umsetzung in die zweite Frequenzlage 35 von der Mobilfunkeinrichtung 55 abgestrahlt. Bei Programmpunkt 245 wird geprüft, ob der Rundfunkempfänger 70 auf dem Notkanal ein Quittierungssignal von der Zentrale 15 detektiert hat. Ist dies der Fall, so wird zu Programmpunkt 210 verzweigt, andernfalls wird zu Programmpunkt 240 verzweigt.

In Figur 6 wird der Ablaufplan für den Empfang und die Verarbeitung von Notrufsignalen durch die funkgesteuerte Zentralverriegelung 110 dargestellt. Bei Programmpunkt 300 wird geprüft, ob ein Funksignal empfangen wurde. Ist dies der Fall, so wird zu Programmpunkt 305 verzweigt, andernfalls wird zu Programmpunkt 300 zurückverzweigt. Bei Programmpunkt 305 wird aufgrund der Codierung geprüft, ob es sich bei dem empfangenen Signal um ein Zentralverriegelungssignal handelt. Ist dies der Fall, so wird zu Programmpunkt 330 verzweigt, andernfalls wird zu Programmpunkt 310 verzweigt. Bei Programmpunkt 330 wird das Fahrzeug bzw. die mobile Station je nach empfangenem Zentralverriegelungssignal entsichert oder gesichert. Anschließend wird zu Programmpunkt 300 verzweigt. Bei Programmpunkt 310 wird aufgrund der Codierung geprüft, ob es sich bei dem empfangenen Signal um ein Notrufsignal handelt. Ist dies der Fall, so wird zu Programmpunkt 315 verzweigt, andernfalls wird zu Programmpunkt 300 verzweigt. Bei Programmpunkt 315 wird die aktuelle Zeit ermittelt. Bei Programmpunkt 320 wird das Notrufsignal decodiert. Bei Programmpunkt 325 wird das decodierte Notrufsignal mit der ermittelten Zeit an die Mobilfunkeinrichtung 55 abgegeben. Eine Positionsbestimmung findet dann durch die Mobilfunkeinrichtung 55 statt, ebenfalls eine Speicherung des Notrufs, der ermittelten Zeit und Position. Der so aufbereitete Notruf wird dann von der Mobilfunkeinrichtung 55 solange abgestrahlt, bis ein entsprechendes Quittierungssignal von der Zentrale 15 in der funkgesteuerten Zentralverriegelung 110 detektiert und an die Mobilfunkeinrichtung 55 weitergeleitet oder vom Mobilfunkempfänger 105 in der ersten Frequenzlage 30 detektiert wird.

Die Detektion von Notrufsignalen durch den Mobilfunkempfänger 105 der Mobilfunkeinrichtung 55 erfolgt durch Abtasten der ersten Frequenzlage 30 durch den Mobilfunkempfänger 105 zu vorgegebenen Zeiten, so daß der Ablauf des Empfangs und der Verarbeitung von durch die Mobilfunkeinrichtung 55 empfangenen Notrufsignalen analog dem Ablaufplan von Figur 5 stattfindet. Die Position wird dabei wie bereits beschrieben durch die Mobilfunkeinrichtung 55 selbst ermittelt.

In einem weiteren Ausführungsbeispiel gemäß Figur 4 weist die erste mobile Station 1 einen mit der Sendeeinrichtung 20 verbundenen Empfänger 135 auf, der an eine Empfangsantenne 130 angeschlossen ist. Außerdem ist eine Leitzentrale 40 mit einer Sendeanlage 41 vorgesehen, die Funksignale zur ersten mobilen Station 1 abstrahlt. Auf diese Weise kann die Sendeeinrichtung 20 durch die Leitzentrale 40 zur Abstrahlung von Funksignalen aktiviert werden. Dies ist besonders zur Erkennung und zum Aufspüren gestohlener Fahrzeuge geeignet, da ein gestohlenes Fahrzeug zur Abstrahlung seiner Position aktiviert werden kann.

In jedem Fall werden die von der Empfangsanlage 25 an dem zentralen Punkt empfangenen Notrufsignale von der Zentrale 15 nach ihrem Informationsgehalt untersucht, so daß in der Zentrale 15 in Abhängigkeit des ermittelten Informationsgehalts entsprechende Hilfsmaßnahmen eingeleitet werden können.

## Patentansprüche

1. Verfahren zur Übertragung von Funksignalen, vorzugsweise von solchen mit schwacher Leistung, die von einer insbesondere in einem Fahrzeug (1) eingebauten Sendeeinrichtung (20) ausgesendet werden, zu mindestens einer an einem zentralen Punkt befindlichen Empfangsanlage (25), wobei die vorzugsweise codierten und/oder digital modulierten Funksignale von mindestens einer Sende-/Empfangseinrichtung (50, 55) einer vorzugsweise mobilen Station (5, 10) empfangen werden, wobei in den Funksignalen enthaltene Informationen in der Station (5, 10) ausgewertet werden, wobei in Abhängigkeit der Auswertung weitere Funksignale mit den enthaltenen Informationen von der Sende-/Empfangseinrichtung (50, 55) abgestrahlt werden und wobei diese Funksignale in der an dem zentralen Punkt befindlichen Empfangsanlage (25) zur weiteren Auswertung empfangen werden, **dadurch gekennzeichnet, daß** bei Absinken der Sendeleistung einer Antenne (45) der Sendeeinrichtung (20) unter einen vorgegebenen Wert eine Hilfsantenne automatisch an die Sendeeinrichtung (20) angekoppelt wird.

2. Verfahren nach Anspruch 1, **dadurch gekennzeichnet, daß** die Übertragung der Funksignale zwischen der Sendeeinrichtung (20) und der Sende-/Empfangseinrichtung (50, 55) in einem ersten Funknetz durchgeführt wird und daß die Übertragung der Funksignale zwischen der Sende-/Empfangseinrichtung (50, 55) und der an dem zentralen Punkt befindlichen Empfangsanlage (25) in einem zweiten vom ersten Funknetz verschiedenen Funknetz durchgeführt wird.

3. Verfahren nach Anspruch 1 oder 2, **dadurch gekennzeichnet, daß** die Übertragung der Funksignale zwischen der Sendeeinrichtung (20) und der Sende-/Empfangseinrichtung (50, 55) in einer ersten Frequenzlage (30) durchgeführt wird und daß die Übertragung der Funksignale zwischen der Sende-/Empfangseinrichtung (50, 55) und der an dem zentralen Punkt befindlichen Empfangsanlage (25) in einer zweiten von der ersten Frequenzlage verschiedenen Frequenzlage (35) durchgeführt wird.

4. Verfahren nach einem der vorherigen Ansprüche, **dadurch gekennzeichnet, daß** die Funksignale zur Übertragung eines Notrufs verwendet werden.

5. Verfahren nach einem der vorherigen Ansprüche, **dadurch gekennzeichnet, daß** mit den weiteren Funksignalen die Position der Sendeeinrichtung (20) und/oder der Sende-/Empfangseinrichtung (50, 55) übertragen wird.

6. Verfahren nach einem der vorherigen Ansprüche, **dadurch gekennzeichnet, daß** die Sendeeinrichtung (20) ferngesteuert durch eine Leitzentrale (40) zur Abstrahlung von Funksignalen aktiviert wird.

7. Verfahren nach einem der Ansprüche 1 bis 5, **dadurch gekennzeichnet, daß** die Sendeeinrichtung (20) durch Sensorsignale, vorzugsweise durch einen Airbagsensor, einen Gurtsensor, einen Crashsensor oder dergleichen zur Abstrahlung von Funksignalen aktiviert wird.

8. Verfahren nach einem der vorherigen Ansprüche, **dadurch gekennzeichnet, daß** die Funksignale zwischen der Sendeeinrichtung (20) und der Sende-/Empfangseinrichtung (50, 55) mit einer vorgegebenen Frequenz übertragen werden.

9. Verfahren nach einem der vorherigen Ansprüche, **dadurch gekennzeichnet, daß** die Funksignale zwischen der Sendeeinrichtung (20) und der Sende-/Empfangseinrichtung (50, 55) breitbandig in einem vorgegebenen Frequenzbereich übertragen werden.

## Claims

1. Method for transmitting radio signals, preferably weak radio signals which are emitted by a transmitter device (20) which is installed in particular in a vehicle (1), to at least one receiver system (25) which is located at a central point, the radio signals which are preferably encoded and/or modulated digitally being received by at least one transceiver device (50, 55) of a preferably mobile station (5, 10), information contained in the radio signals being evaluated in the station (5, 10), further radio signals with the information contained in them being emitted by the transceiver device (50, 55) as a function of the evaluation, and these radio signals being received in the receiver system (25) located at the central point, for further evaluation, **characterized in that** when the transmission power of an antenna (45) of the transmitter device (20) drops below a predefined value an auxiliary antenna is automatically coupled to the transmitter device (20).

2. Method according to Claim 1, **characterized in that** the transmission of the radio signals between the transmitter device (20) and the transceiver device (50, 55) is carried out in a first radio network, and **in that** the transmission of the radio signals between the transceiver device (50, 55) and the receiver system (25) which is located at the central point is carried out in a second radio network which is different from the first radio network.

3. Method according to Claim 1 or 2, **characterized in that** the transmission of the radio signals between the transmitter device (20) and the transceiver device (50, 55) is carried out in a first frequency slot (30), and **in that** the transmission of the radio signals between the transceiver device (50, 55) and the receiver system (25) which is located at the central point is carried out in a second frequency slot (35) which is different from the first frequency slot.

4. Method according to one of the preceding claims, **characterized in that** the radio signals are used to transmit an emergency call.

5. Method according to one of the preceding claims, **characterized in that** the position of the transmitter device (20) and/or of the transceiver device (50, 55) is transmitted with the further radio signals.

6. Method according to one of the preceding claims, **characterized in that** the transmitter device (20) is activated under remote control by a control centre (40) for emitting radio signals.

7. Method according to one of Claims 1 to 5, **characterized in that** the transmitter device (20) is activated by sensor signals, preferably by an airbag sensor, a seatbelt sensor, a crash sensor or the like, to emit radio signals.

8. Method according to one of the preceding claims, **characterized in that** the radio signals are transmitted between the transmitter device (20) and the transceiver device (50, 55) at a predefined frequency.

9. Method according to one of the preceding claims, **characterized in that** the radio signals are transmitted between the transmitter device (20) and the transceiver device (50, 55) over broadband in a predefined frequency range.

## Revendications

1. Procédé de transmission de signaux radioélectriques, de préférence de faible puissance et émis par un émetteur (20) intégré en particulier dans un véhicule (1), à au moins un récepteur (25) situé à un emplacement central, selon lequel les signaux radioélectriques de préférence codés et/ou numériquement modulés, sont reçus d'au moins un émetteur/récepteur (50, 55) d'une station de préférence mobile (5, 10) et les informations contenues dans les signaux radioélectriques sont exploitées dans la station (5, 10) puis, en fonction de l'évaluation, d'autres signaux radioélectriques contenant les informations sont émis par l'émetteur/récepteur (50, 55) et ces signaux radioélectriques sont reçus dans le récepteur (25) situé à l'emplacement central pour une autre exploitation,
**caractérisé en ce que**
lorsque la puissance d'émission d'une antenne (45) de l'émetteur (20) descend en dessous d'une valeur prédéterminée, une antenne auxiliaire est automatiquement couplée à l'émetteur (20).

2. Procédé selon la revendication 1,
**caractérisé en ce que**
la transmission des signaux radioélectriques entre l'émetteur (20) et l'émetteur/récepteur (50, 55) est réalisée dans un premier réseau radioélectrique et la transmission des signaux radioélectriques entre l'émetteur/récepteur (50, 55) et le récepteur (25) situé à l'emplacement central est réalisée dans un deuxième radioélectrique différent du premier.

3. Procédé selon la revendication 1 ou 2,
**caractérisé en ce que**
la transmission des signaux radioélectriques entre l'émetteur (20) et l'émetteur/récepteur (50, 55) est réalisée dans une première plage de fréquence (30) et la transmission des signaux radioélectriques entre l'émetteur/récepteur (50, 55) et le récepteur (25) situé à l'emplacement central est réalisée dans une deuxième plage de fréquence (35) différente de la première.

4. Procédé selon l'une des revendications précédentes,
**caractérisé en ce que**
les signaux radioélectriques sont utilisés pour la transmission d'un appel d'urgence.

5. Procédé selon l'une des revendications précédentes,
**caractérisé en ce que**
la position de l'émetteur (20) et/ou de l'émetteur/récepteur (50, 55) est transmise avec les autres signaux radioélectriques.

6. Procédé selon l'une des revendications précédentes,
**caractérisé en ce que**
l'émetteur (20) est activé par commande à distance par une centrale de commande (40) pour émettre des signaux radioélectriques.

7. Procédé selon l'une des revendications 1 à 5,
**caractérisé en ce que**
l'émetteur (20) est activé par des signaux de capteur, de préférence par un capteur d'airbag, un capteur de ceinture, un capteur de collision ou similaires, pour émettre des signaux radioélectriques.

8. Procédé selon l'une des revendications précédentes,
**caractérisé en ce que**
les signaux radioélectriques entre l'émetteur (20) et l'émetteur/récepteur (50, 55) sont transmis avec une fréquence prédéterminée.

9. Procédé selon l'une des revendications précédentes,
**caractérisé en ce que**
les signaux radioélectriques entre l'émetteur (20) et l'émetteur/récepteur (50, 55) sont transmis sur une large bande dans une gamme de fréquence prédéterminée.
